(19) Europäisches Patentamt
European Patent Office
Office européen des brevets

(11) **EP 4 464 983 B1**

(12) **EUROPEAN PATENT SPECIFICATION**

(45) Date of publication and mention
of the grant of the patent:
**01.04.2026 Bulletin 2026/14**

(51) International Patent Classification (IPC):
**G01C 15/02** *(2006.01)*    **G01D 5/244** *(2006.01)*
**G01D 5/347** *(2006.01)*    **G01D 18/00** *(2006.01)*

(21) Application number: **23174345.1**

(22) Date of filing: **19.05.2023**

(52) Cooperative Patent Classification (CPC):
**G01C 15/02; G01D 5/3473;** G01D 18/001

(54) **OPTO-ELECTRONIC GEODETIC SURVEYING INSTRUMENT**

OPTO-ELEKTRONISCHES GEODÄTISCHES VERMESSUNGSINSTRUMENT

INSTRUMENT DE SURVEILLANCE OPTO-ÉLECTRONIQUE GÉODÉSIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**20.11.2024 Bulletin 2024/47**

(73) Proprietor: **Hexagon Innovation Hub GmbH
9435 Heerbrugg (CH)**

(72) Inventors:
• **ZEH, Jochen
88239 Wangen im Allgäu (DE)**
• **WENK, Markus
7000 Chur (CH)**
• **VOKINGER, Urs
9434 Au (CH)**
• **AMANN, Werner
6800 Feldkirch (AT)**

(74) Representative: **Kaminski Harmann
Patentanwälte AG
Landstrasse 124
9490 Vaduz (LI)**

(56) References cited:
**EP-A1- 3 026 393    EP-A2- 2 103 905
EP-A2- 2 607 845    WO-A2-2011/064317**

## Description

The present invention relates generally to a geodetic surveying instrument according to claim 1 and to a corresponding method of deriving target point coordinates according to claim 12.

Numerous geodetic surveying devices for surveying target points have been known since antiquity. In this case, distance and direction or angle from a measuring device to the target point to be measured are recorded as spatial standard data. Typical target points in this case are natural targets such as church towers, or auxiliary instruments such as leveling rods, surveying poles or target marks, e.g. having retroreflectors.

The most common surveying instruments nowadays are so called total stations, which can be described as enhanced embodiments of tachymeters, providing a motorized movement of the aiming or target direction of an opto-electrical distance measurement, in angular coordinates commonly oriented (at least substantially) horizontal and vertical. Those devices can thereby provide many automated functions. Examples can e.g. be found in US 2007/104353, US 2009/024342, US 2015/176991, EP 1 836 457 or others. However, the present invention can also be applied to other cognate types of geodetic surveying instruments such as e.g. Laser Scanners or Laser Trackers.

Modern total stations generally have a compact and integrated design, wherein coaxial distance-measuring elements as well as computing units, control units, and memory units are usually present in a device. Depending on the configuration level of the total station, a motorization of the targeting and sighting device as well as means for automatic target-seeking and tracking can also be integrated. The total station can comprise an electronic display control unit - generally a microprocessor computing unit including electronic data storage means - comprising a display and input means, e.g., a keyboard, as said human-machine interface. The measurement data gathered via electrosensory means are fed to the display control unit, and so the position of the target point can be determined, optically displayed, and stored by means of the display control unit. Total stations known from the prior art can also comprise a radio data interface for establishing a radio link to external peripheral components such as, e.g., to a portable data acquisition device which can be designed, in particular, as a data logger or a field computer.

For the purpose of sighting or targeting the target point to be measured, geodetic surveying devices of the type in question comprise a sighting unit or telescope, such as, e.g., an optical telescope. The sighting unit is generally rotatable relative to a base of the measuring device about a first, vertical or standing axis and about a second, horizontal or elevation axis, and so the telescope and therewith the line of sight or target direction can be oriented towards the point to be measured by means of swiveling and tilting.

A camera can be integrated into the sighting telescope and, for example, oriented coaxially or in parallel, for capturing an image in addition to the optical measuring channel, wherein the captured image can be depicted, in particular, as a live image on the display of the display control unit and/or on a display of a remote control.

The optical system or the optical viewing channel of the sighting device usually contains an objective lens group, an image inversion system, a focusing lens, a reticle for generating crosshairs, and an eyepiece, which are situated, e.g., in this order proceeding from the object side. The position of the focusing lens group is adjusted depending on the object distance in such a way that a sharp object image appears on the reticle situated in the focusing plane. This can be observed through the eyepiece or, e.g., by means of a camera.

In geodetic surveying such as land surveying or construction site surveying, it is an object to determine geometrical properties of one or more target points, like coordinates, distances, and orientations. In most instances those properties have to be determined with respect to a known reference system, which can e.g. be defined by one or more known reference points, e.g. embodied by known and/or defined reference marks in vicinity. Such devices comprise electrosensory, e.g. opto-electronic angle- and distance-measuring functions which make it possible to determine a direction and a distance to a selected target point. In all these instruments, the measurement direction has to be derived precisely by angular measurement units like angular encoders at the rotation axes (vertical and horizontal axes) of the surveying instrument. In many goniometers, pattern elements are mapped optically onto an arrangement of one or more light detector elements or image sensors, e.g. CCD or CMOS sensors. Therefore, such an optical encoder includes a light source, e.g. a LED, said image sensor and an encoding medium, e.g. a code disc, carrying said pattern elements in form of a code track. The light source projects light toward the track from one side of the encoding medium. The track modulates light from the light source and the modulated transmissive or reflective light propagates to the image sensor. The image sensor generates electric signals for being postprocessed by a processor according to the code modulated illumination light being received.

The angle of the rotational body relative to the sensor can be inferred from the position of the pattern elements on the sensor arrangement.

In other words, the orientation of the targeting or measuring axis is determined by a calculation using the rotational orientation of the first, e.g. vertical, axis and of the second, e.g. horizontal, axis as inputs measured with angle encoders when pointing at the target. The calculation further depends on the angle between the first axis and the second axis and the angle between the second axis and the measuring axis. These angles are defined by the mechanical structure of the surveying instrument, and surveying instruments are typically designed such that these angles amount to 90° (orthogonal). However, in fact these angles usually deviate from the ideal values due to mechanical imperfections and these angles may change over time due to influences from the environment such as changing temperatures. If significant forces act on parts of the apparatus during determination of angles of rotation, e.g. in the case of a tilt of the instrument or fast rotation, eccentricities dependent on the angle of rotation or changing as a function of time can occur. These are brought about or increased, for example, by a bearing play in any case present and change due to the lubrication of the bearing and the bearing load. Moreover, tumbling errors occur as a result of an inclination of the axis of rotation of the rotational body. In order to reduce or to avoid such mechanical bearing errors, comparatively high-value, complicated bearings are often used with however high manufacturing and maintenance demands and costs.

As said, the target direction and distance are determined in the interior reference system and mostly must also be linked to the external reference system. In many geodetic measurements for example, the surveying instrument is installed above a surface reference mark at ground or above an otherwise embodied, fixed reference, commonly by using a tripod supporting the surveying instrument. The instruments are usually leveled, e.g. by an inclination sensor whereby a relatively exact physical leveling of the instrument (e.g. by a tribrach and a spirit level) is required. Under perfect conditions the vertical axis of the surveying instrument should be aligned with a plumb line and the rotational axes with the horizontal and vertical planes. Due to e.g. imperfections in the alignment, tilt or subsidence of the support after stationing resulting in imperfections in horizontal alignment, the vertical axis of the instrument may be misaligned by an angle in relation to a plumb line, resulting in an inclination or tilting error (deviation of the standing axis and the vertical direction respectively of the horizontal axis and the horizontal plane) and possible position shifts or deformations of the instrument or axes due to the weight of instrument components.

Hence, there are several sources of errors for target point measurements such as horizontal axis error or trunnion axis error (deviation of the elevation axis from being orthogonal to the standing axis), collimation error (deviation of the line of sight from being orthogonal to the elevation axis) or vertical index error (deviation of the line of sight from being orthogonal to the standing axis or deviation from 0° of the second axis as determined by the instrument's controller when the sighting unit is in fact exactly pointing to the zenith).

There are known methods of calibrating a surveying instrument in which the angles mentioned above, or the deviations of these angles from the angles expected based on the design of the surveying instrument, can be measured using dedicated measuring setups external to the surveying instrument. For example, it is known in the art, e.g. by the EP 2728309 A2, to obtain calibration-error corrections by obtaining a tilt reading in a first direction, turning the instrument 180° and obtaining a tilt reading in a second direction, and calculating the average of the tilt readings in the two directions. Any deviation from zero is considered an error that has to be stored for use as a zero point correction. A collimation error can be calculated by performing a two-face measurement to a static target and calculate the collimation error from the difference of the angles in face one and face two, a principle as for example also referred to in the EP 3540374 A1. EP 3696498 A1 describes a calibration method based on a plurality of measurements.

Typically, such calibration methods are performed in a factory, a site operated by a supplier of the measuring instrument, or a site of a user of the surveying instrument whereby calibration parameters are stored in the instrument's software. These methods may provide an accurate calibration but consume significant amounts of time and/or resources, e.g. in form of additional calibration tools, e.g. as referred to in the EP 2707745 A1. Moreover, subsequent to a most recent calibration, temporal changes of the errors during a surveying in the field can occur, for instance due to environmental influences such as temperature change which is difficult to consider or include in calibration parameters if at all possible and which is of particular importance in outdoor surveying.

EP 2607845 A2 relates to a surveying instrument such as a total station having angle encoder means with an image sensor for evaluation of an image pattern allowing to detect a tilt angle of the instrument's rotation.

WO 2011064317 A2 discloses an angle measuring device.

EP 3026393 A1 refers to a rotary laser and a tilt detecting device for detecting a tilt between a base plate and a pivot member, having an optical angle detection pattern.

It's therefore an object of the present invention to improve a geodetic surveying instrument and a geodetic surveying method.

It is a further object to provide a geodetic surveying instrument and a geodetic surveying method with reduced influence of imperfections of the instrument, in particular imperfections of instrument's rotation axes.

It is another object of the present invention to provide a geodetic surveying instrument and a geodetic surveying method with reduced measurement effort, in particular reduced calibration effort while at least maintaining precision.

These objects are achieved by realising the features of the independent claims. Features which further develop the invention in an alternative or advantageous manner are described in the dependent patent claims.

The present invention therefore relates to a geodetic surveying instrument, e.g. a total station, laser scanner, laser profiler or laser tracker, comprising a sighting unit for aiming in a target direction at a measurement target point of an object to be surveyed, an opto-electronic distance meter built to determine a target distance to the measurement target point aimed at and a defined first axis of rotation, e.g. a vertical axis, and optionally a defined second axis of rotation, e.g. a horizontal axis, for setting the target direction or changing a targeting axis by rotation about the axis.

The instrument further comprises at least one optical angle encoder situated at the axis and built to determine the target direction, having a code carrier and one or multiple image sensors for capturing an image of code of the code carrier, using non-collimated light. The code carrier and image sensor are rotatable relative to one another about said defined axis of rotation as a first degree of freedom (DoF). The image sensor is often called read head. An optical encoder consists of one or multiple read heads. The read head is embodied as a 2D-image sensor (area sensor, having a pixel matrix) or as line sensor. When a line sensor is used as read head, an arrangement of at least four read heads distributed with respect to the code carrier is required to determine all six degrees of freedom. Theoretically, also three read heads would be sufficient, but for practical reasons, two pairs of opposite read heads are beneficial. When a 2D-image sensor is used, a single read head is theoretically sufficient. However, in practice a pair of opposite 2D-image sensors is often used. Furthermore, when a 2D-image sensor is used, also the code on the code carrier can be two-dimensional.

Further, the instrument has a controller configured to derive measured coordinates of the measurement target point based on the determined target direction and target distance of the measurement target point. The controller is configured to determine the target direction based on evaluation of a code image of the 2D-sensor or code images generated by the multiple 1D-image sensors. The image evaluation considers a rotational position relative to the axis of rotation in said first degree of freedom of code carrier relative to image sensor as well as a further, second position in at least a further, second degree of freedom of code carrier relative to image sensor.

In other words, reading of code of an axis' angle encoder is sensitive for the position of rotation about the defined axis of rotation as well as for at least another position in another direction. Such a movement direction of the code carrier relative to the image sensor(s) is in a radial/tangetial direction regarding the axis of rotation (in-plane axis shift), in direction of the axis of rotation or a tilt of the code carrier relative to the image sensor (out-of-plane shift). Hence, the further DoF can be one of the two rotational DoFs other than the rotation about the "main" rotational axis or one of the three translational DoFs.

According to the invention, the code images are indicative of all six DoFs and the controller is configured to evaluate code images with respect to all six degrees of freedom of the code carrier relative to the image sensor (rotational position, deflection and tilting).

As a movement of the code carrier relative to the image sensor represents a movement of the first or second rotation axis in either DoF which influences the instrument's targeting direction, the evaluation of the code image encoding the code carrier/axis movement in multiple DoFs, in particular all DoFs, enables a highly determined measuring of the targeting direction.

Optionally, the controller is configured to determine the target direction based on a target direction calculation model with values for the rotational position and the further position (=further degree of freedom) derived from the code image evaluation as input. As a further option, the calculation model is designed to directly compensate misalignments of the axes. Hence, deviations from an ideal axis alignment are taken into account or cancelled out in the target direction determination.

In some embodiments, the controller is configured to determine and/or compensate a deviation from an exact orientation of the axis of rotation.

Optionally, the further position is used to determine and/or compensate a change of relative position, in particular corresponding to the further degree of freedom of the code carrier, of the sighting unit with respect to a support or receptacle and/or a deformation of the sighting unit and/or a support of the sighting unit as a change in shape and/or size.

As still another option, the controller is configured to determine the target direction based on said image evaluation with respect to the further position in dependence on a tilting of the vertical axis, in particular by weighting the second position in dependence on a degree of tilting.

In further developed instruments, the controller is configured to put out a notice, in particular a user warning, if a defined threshold for the second position is exceeded.

Optionally, the controller is configured to collect and evaluate a history of position values in order to determine a wearing condition of the geodetic surveying instrument, in particular of an axis bearing.

In some embodiments, a respective code carrier comprises a transparent code disc enclosed by at least one reflective surface in such a way that light illuminating the code carrier is reflected one or several times within the code disc before exiting the code disc.

The invention also relates to a method for a determining measured coordinates of a measurement target point with a geodetic surveying instrument having a defined axis of rotation denoted vertical axis, and a defined second axis of rotation, denoted horizontal axis for setting a target direction by rotation about the axis, an optical angle encoder, having a code carrier and an image sensor embodied as a 2D-image sensor and/or as an arrangement of at least four line sensors distributed with respect to the code carrier for capturing an image of code of the code carrier using non-collimated light. The code carrier and image sensor are designed to rotate relative to one another about the defined axis of rotation as a first degree of freedom.

The method comprises aiming in the target direction at the measurement target point, whereby the target direction is set by rotation about the horizontal and vertical axis, determining the target direction, opto-electronically determining a target distance to the measurement target point aimed at and deriving measured coordinates of the measurement target point based on the determined target direction and target distance of the measurement target point.

In addition, the method comprises determining the target direction based on evaluation of a code image of the encoder of each available image sensor with respect to a rotational position relative to the axis of rotation in said first degree of freedom of the code carrier relative to image sensor and with respect to a further or second position in at least a further or second degree of freedom of code carrier relative to image sensor.

Optionally, calibration reference values are defined by a factory calibration procedure which includes a self-calibration step with at least 90deg-rotating the image sensor or image sensor arrangement relative to the code carrier about the axis of rotation and setting harmonic errors derived therefrom to zero. For example, the encoder is turned around its own axis and raw-data of each image sensor is acquired over minimum 90°-rotation. With the raw-data all calibration parameter are determined. During the self-calibration process, the harmonic deviations/errors of the additional degree of freedom are set to zero. Then, for every measurement after the calibration an "absolute" value for all six degree of freedom is calculated which is for the additional degree of freedoms in principal the change since the calibration, i.e. a difference to the respective calibration value. Thus, for a six-DoF determination, an absolute rotation angle, an "absolute" in-plane shift and an "absolute" out-of plane displacement are determined ("absolute" meaning a value compared to the calibration value). Thereby as a further option, the evaluation with respect to the further degree of freedom comprises determining a difference to the calibration reference values.

The invention also relates to a computer program product, in particular for the controller of a surveying instrument as claimed, having computer-executable instructions for performing the automatic execution of the steps of the method as claimed.

The present invention provides the advantages of measuring of axis wobble and direct compensation, for example using a theodolite compensation model. Above that, misalignments of the axes can be measured by the multiple-DoFs-angle-encoders, in particular 6-DoFs-encoders and directly compensated. By doing this the surveyor can avoid two-face measurements respectively has only to do this when a change of the axis alignment has been detected. This feature can help to reduce the measuring time significantly without reducing accuracy.

As another advantage, tilting of the instruments vertical or standing axis can be detected and compensated. Doing this the quality of the bearing can be reduced (similar to the horizontal axis where the wobble will be compensated by a tilt-sensor).

As still another advantage, mechanical deformations can be compensated if measurements in tilted positions of the surveying instruments are done. Thus, measurements, e.g. with a tilted instrument of 10° without any negative impact because of gravity induced deformations, are possible. Also, axis deformations caused by external influences like one-sided warming by the sun can be compensated at least to some extent with the help of the gathered multi-DoF information.

Also, multi-DoF information can be used for health monitoring or setting times of service or overhaul respectively for warning the user by a corresponding message on the display when a recalibration is necessary for example.

Devices, methods and setups according to the invention are described or explained in more detail below, purely by way of example, with reference to working examples shown schematically in the drawing. The diagrams of the figures should not be considered as being drawn to scale. Where appropriate, the same reference signs are used for the same features or for features with similar functionalities. Different indices to reference signs are used to differentiate between different embodiments of the same or an equivalent feature that is shown exemplary.

Specifically,

Fig. 1 shows an example for a geodetic surveying instrument as known in the art;

Fig. 2 shows a schema of measurement and targeting axes;

Figs. 3a-e show a schematic diagram of structural designs of an angle encoder with code carrier and image sensor enabling code image evaluation;

Figs. 4a-c illustrate schematically an axis shift which is evaluated for target axis determination;

Fig. 5a-b illustrate schematically an out-of-plane shift of the code carrier with respect to the image sensors;

Fig. 6 shows another example of a code with code elements situated on a code carrier; and

Fig. 7 schematically shows a diagram as an example for a method for processing of the multidimensional angle encoder information.

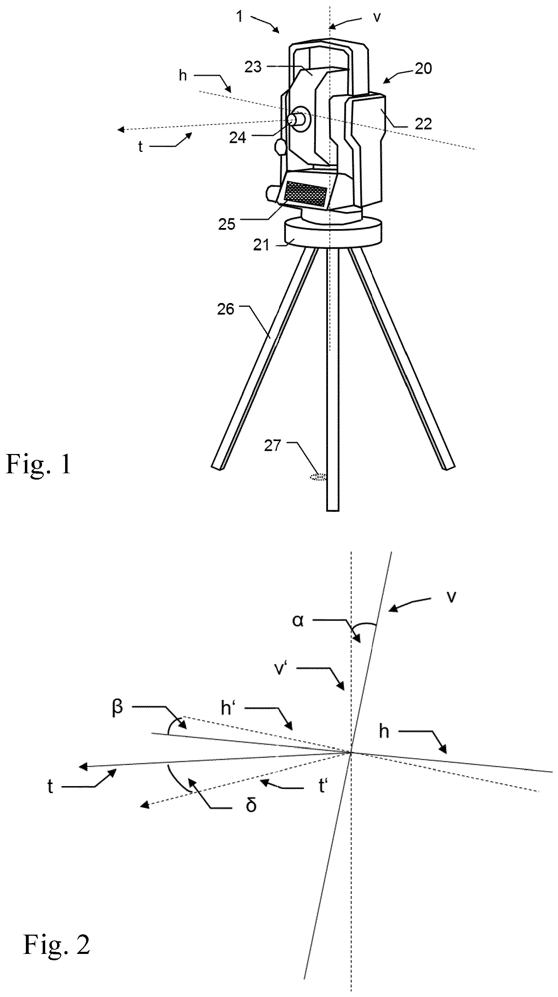

**Fig. 1** shows a total station 1 as an example for a geodetic surveying instrument as known in the art. The depicted exemplary total station 1 is adapted for measuring horizontal and vertical angles and distances to a remote target object.

The total station 1 is provided on a tripod 26, a base 21 of the total station 20 being directly fixed on the tripod 26. The main part 20 of the total station 1 is rotatable relative to the base 21 about first rotational axis v. The main part 20 comprises a support 22, in this exemplary embodiment being formed by two columns. Between the columns a sighting unit or telescope 23 is supported. Furthermore, the main part 20 comprises display and controlling means 25 for controlling the total station 1 and for processing, displaying and storing measurement data. Total stations 1 as known from the prior art can furthermore comprise a radio data interface (not shown) for establishing a radio connection to external peripheral components such as e.g. a portable data detection device, which, in particular, can be embodied as a data logger or a field computer.

The sighting unit 23 is arranged on the support 22 tiltably around a second rotational axis h and thus can be rotated about two axes v,h with respect to the base 21. Motor means (not shown) are provided for performing the required tilting movements for the alignment of the telescope 23. In general, the telescopic sight can be rotated about an at least substantially vertical axis v and about an at least substantially horizontal axis h relative to the base 21 of the measuring device 1, such that the telescope can be aligned on the measurement target point to be surveyed by aiming the sighting unit 23, which can involve pivoting and/or tilting.

The telescope unit 23 can be built as a component unit, wherein an optical system, a coaxial camera sensor, an eyepiece 24 and a graphics processor are integrated in a common telescope unit housing. The telescope unit 23 can be aimed at a target object so that the distance from the total station 1 to a measurement target point can be detected by means of opto-electronic distance sensors.

Furthermore, electronic angle sensors (not shown) are provided at a respective first and second axis v,h for detecting an angular orientation of the main part relative to the base 21 and of the telescope unit 23 relative to the support or receptacle 22. When carrying out a target point measuring functionality controlled manually or automatically by the control and processing unit 25, the measurement radiation, e.g. pulsed laser light, is aligned highly precisely on at least one target point, whereby the desired target point can be surveyed in a geodetically accurate fashion to derive its target point coordinates.

The data are sent to the display and controlling means 25 and processed so that the position of the target point relative to the total station 1 is detectable, displayable and storable by the display and controlling means 25. Hence, the instrument 1 has electrical-sensor-based angle and distance measuring functions that permit direction of the aiming axis or targeting axis t and distance to be determined with respect to a selected target point. The target direction t can for example be determined in form of polar coordinates or by computing the pointing direction vector, which together with the measured distance directly yields the cartesian coordinates of the target the user is interested in.

The determined coordinates are established in an internal reference system of the instrument 1 and, if appropriate, also can be linked to an external reference system for absolute position determination, e.g. via referencing the instrument 1 to a reference ground mark 27. However, in case the first and second axes v,h are not oriented as predicted, e.g. perfectly aligned 90° to each other but misaligned, this results in measurement errors as explained in more detail with respect to following figure 2.

**Fig. 2** depicts schematically said rotational axes v,h by rotation of which the targeting direction t can be set or changed. Ideally, the orientation of axes v,h is well defined and well known, e.g. they are always perfectly oriented rectangular to each other and the second axis v is oriented perfectly vertical.

However, in reality orientation of axes v,h differ from the ideal orientation v', h' by some degree, indicated in the figure by angles $\alpha$ and $\beta$. Accordingly, the real targeting direction t differs from the ideal direction t' by some amount, indicated as angle $\delta$ in the figure. Further, the axes v,h may show a shift or translational deviation from the ideal position (not indicated in the figure). As the calculation of measurement coordinates of a target point are based on the ideal target direction t', the coordinates deviate somehow from reality.

The axes' deviation or misalignment can be reduced by implementing high precision axes e.g. with high precision bearings and/or can determined by calibration and therewith considered in the target point calculation. However, such high end bearings are expensive and calibration procedures as known in the art are cumbersome and time consuming and are not able to fully take account of errors resp. need additional effort for very high measurement precision. The present invention uses another approach by determining the actual orientation or position of the axis using angle encoders.

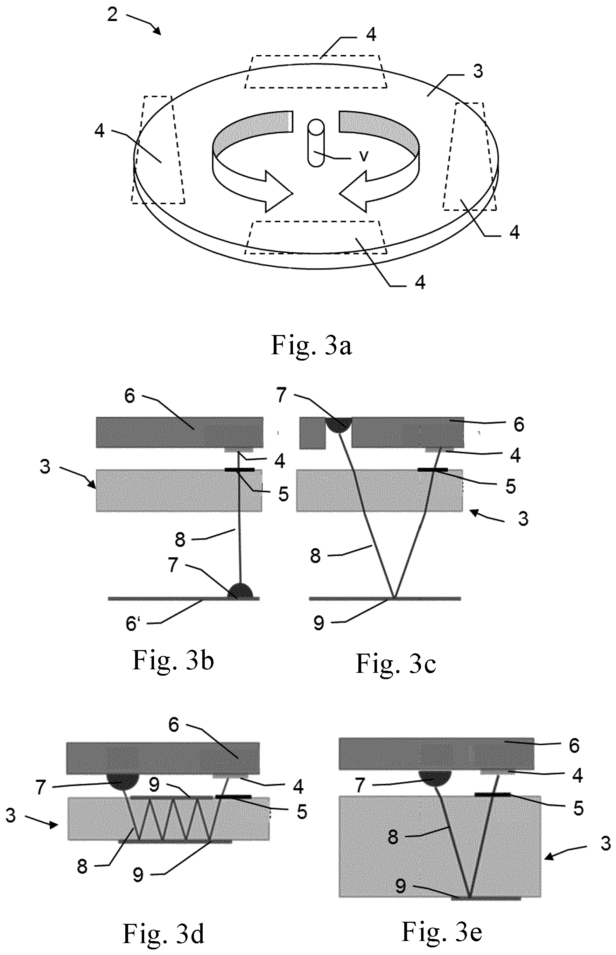

**Figs. 3a-e** show the schematic diagram of structural designs of an angle encoder or a goniometer. The optical encoder 2 comprises a code carrier 3, e.g. a transparent code disc having a multiplicity of pattern elements 5 (see Figs. 3b-f) arranged around a pattern center, a sensor arrangement or read head comprising for example four optical detector elements 4 as shown in Fig. 3a. The disc-shaped rotational body 3 is arranged so as to be rotatable about a first or second rotational axis of the surveying instrument and therewith relative to the fixed read head; in the example the vertical axis v is depicted in Fig. 3a.

For determining a current rotational position of the code disc 3 relative to the detector arrangement 4, at least a part of the pattern elements is mapped or imaged onto the elements of sensor 4. Therefore, for example a LED 7 as shown in Figs. 3b-e emits illumination light 8, in particular non-collimated light, to the code disc 3. The acquisition of each read head 4 is started simultaneously and the instrument's controller has an algorithm to read the image generated by light 8 modulated by code disc 3 at each sensor portion 4, computes an angle for each head 4 and finally the angle of the encoder, e.g. by averaging.

In the example of Fig. 3b, the sensor 4 is arranged on a substrate 6, e.g. a PCB, whereas the LED 7 is arranged opposite sensor 5 and code carrier 3 on another substrate 6'. According to other examples as shown in Figs. 3c-e, the LED 7 is not arranged opposite but on the same side as sensor 4. In example 3c, the light source 7 is integrated in the PCB 6 whereas in examples 3d and 3e, LED 7 is arranged on the PCB 6.

In the one-sided designs of Figs. 3c-e, the code illumination light 8 is reflected either once (3c, 3e) by a mirror 9, which is in the embodiment 3e attached to the lower or bottom side of code disc 8 as a reflective surface or coating, or in order to extent the optical path multiple times as shown in Fig. 3d wherefore the code disc 3 has besides code elements 5 also mirror elements 9 on its upper or top side which faces the light detector 4. Code patterns 5 could also be fitted on both sides of code disc 3.

In any case, the illumination light 8 passes through transparent code disc 3 and at the exit is modulated by code pattern elements 5 depending on the relative pose of code carrier 3 to image sensor 4. Thereby, the code image is dependent on the position and/or orientation of the code disc 3 relative to the sensor 4 with respect to the rotation about axis v as a first degree of freedom and on at least a second degree of freedom.

According to the invention, the pattern elements mapped on the image sensor arrangement 4 are evaluated to determine the target direction not only based on the rotational position with respect to the rotation about first axis v or second axis h as a first degree of freedom, but also regarding at least a further (second) degree of freedom using said dependency of the code image on both the first and second degree of freedom of the code disc 3 relative to the sensor 4.

For example, the code image is evaluated to determine a rotational position for the rotation about the vertical axis v and in addition to determine a shift of axis v in the plane perpendicular to the vertical axis v and to take both into account when calculating the actual targeting axis.

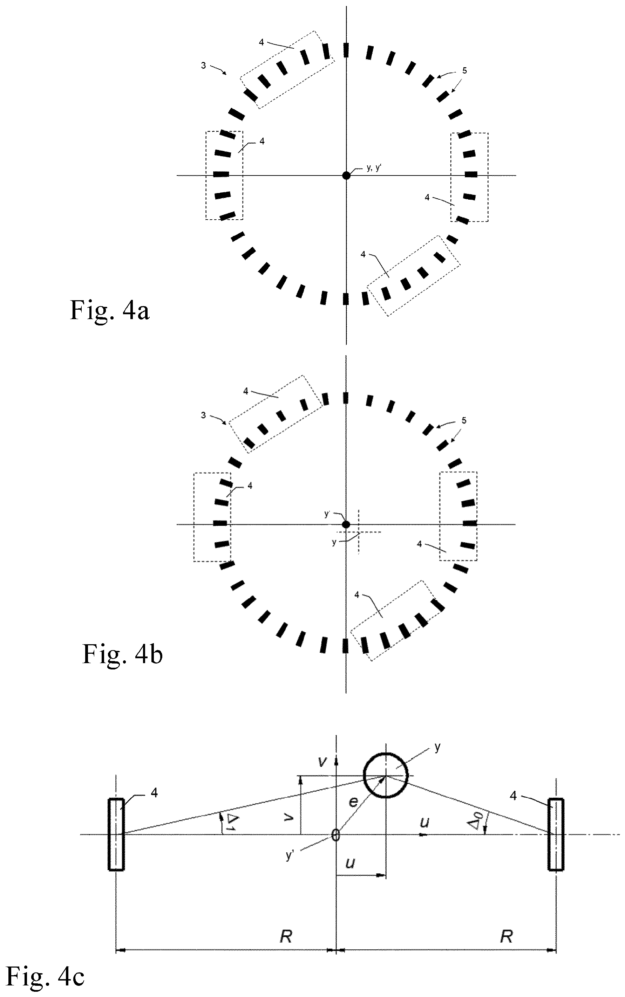

**Figs. 4a-c** illustrate schematically an axis shift which is evaluated for target axis determination, whereby for comparison a schematic diagram of the position of the code carrier without shift is shown in Fig. 4a. Depicted is code carrier 3 with pattern elements 5. In the examples, the code arranged on the rotational body is shown as an incremental code with an equidistance sequence of identical pattern elements 5, merely for reasons of clarity.

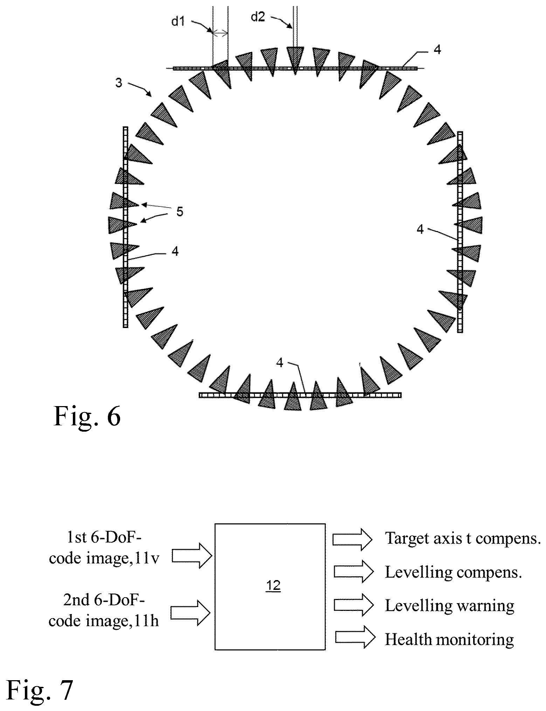

However, the method according to the invention is not limited thereto and can in principle be used for all types of incremental and absolute codes. The code is read by image sensors 4. In the example, the image sensors 4 are arranged as two pairs whereby the sensors 4 of each pair are opposite to each other (spaced 180° apart) and the two pairs are distributed unequally in the circumferential relative to each other (spacing other than 180°, e.g. 45° of sensors on one side and 135° on the other). Other arrangements are possible, too, e.g. without pairing or with equal spacing (cf. also figure 6). Image sensors 4 may be embodied as 1D or line sensors or as 2D or area sensors.

In figure 4a, the actual axis y resp. the center of the pattern assembly resp. of code disc 3 coincides with the ideal axis of rotation y' in this case. For the sensor arrangement comprising the four sensor elements 4, it is possible to define a detector center which should ideally correspond to the pattern center and the axis of rotation y, so that no shift or eccentricity is present.

Figs. 4b and 4c schematically show the effect of an axis' eccentricity or a shift of the in-plane axis position, i.e. in radial direction with respect to axis y. In the case depicted in figure 4b, the axis y and therewith the code disc 3 has been shifted towards the bottom right. With a rotation about the real axis of rotation y, the pattern centre executes a circular movement about the ideal or original axis y' or the center of the image sensor 4. The extent of the in-plane axis error can be determined on the basis of those positions of the pattern elements 5 on the detector elements 4 which are shifted relative to Fig. 4a. Here, when evaluating the code image registered with detector elements 4, an extent of the eccentricity is determined (which extent varies sinusoidally with the period $2\pi$ as a function of the rotational position). This extent of shift of the first axis y is considered in the determination of the target direction together with the rotational position about axis y, also determined by code image evaluation. For example, a calculation model for the target direction is used whereby the measured values for the rotational position and axis shift are used as input variables (see also Fig. 7). A calculation model can be set up in such a way that axis misalignments are directly compensated (the measured axis rotation angle remains the same due to averaging over opposite heads 4), hence any deviation is directly cancelled out in the determination of the targeting axis.

Fig. 4c illustrates schematically a configuration for a calculation example. Shown is again a shift e (amount u in a first in-plane direction and amount v in a second in-plane direction) of the actual rotation axis y compared to its ideal or initial position y'. The shift e results in a shift in receiving angles $\Delta 1$ and $\Delta 0$ (determined with respect to the ideal zero-angles when ideally centered).

Assuming that a respective radius or distance R to the ideal center y' of a sensor head 4 is much larger than the axis displacement (R>>u and R>>v), the in-plane axis displacement can be computed as:

$$e \approx R \cdot sin\Delta = R \cdot sin\frac{\theta_1 - \theta_0}{2} \approx R \cdot \frac{\theta_1 - \theta_0}{2}$$

In order to calculate the in-plane shift in all directions, at least four, for instance eight imaging heads 4 are used.

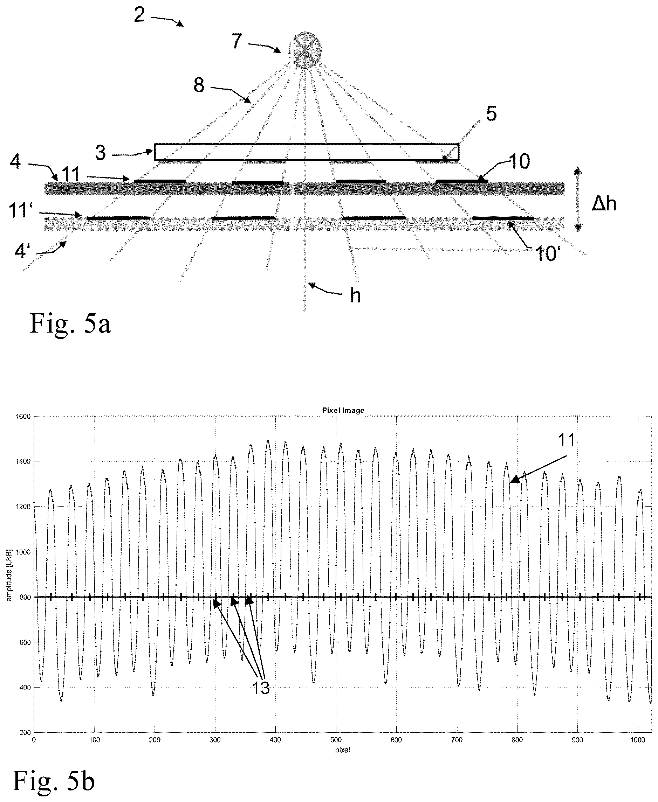

**Figs. 5a, 5b** illustrate schematically evaluation of angle encoder code with respect to another degree(s) of freedom. The figures show a code image 11 as for example captured by a line sensor.

As depicted in figure 5a, a code image 11 is generated by light 8 of light source 7 illuminating code carrier 3. Due to the arrangement of opaque code elements 5 of otherwise transparent code carrier 3, the light produces a code image 11 of the code pattern with imaged pattern elements 10 which can be detected by image sensor 4. The code image 11 depends on the rotational position of code carrier 3 relative to rotation axis h in the example as well as on its distance to the image sensor 4 which ideally is arranged at a defined reference point along axis h.

In case said distance deviates from the original position or rest position by an amount Δh, for example the image sensor 4' is further away from the code carrier 3 as depicted due to a deformation along rotational axis h, a code image 11' is generated which is different to the original code image 11, e.g. in that the opaque areas 10' are greater as indicated in the figure 5a. Said otherwise, a movement in direction of axis h produces a code image 11' which represents the amount of dislocation. Hence, by evaluation a code image 11, 11', a value or more generally spoken an information about an out of plane displacement can be gathered. This information is then used for targeting direction determination.

Using this principle, not only a compression or elongation as a pure translational deformation can be detected and considered, but any out-of plane displacement, i.e. also a tumble resp. a tilt of code carrier 3 relative to sensor 4 resp. a tilt of the surveying instrument's rotational body relative to its counterpart (e.g. telescope relative to alidade). Such a roll or pitch e.g. in case of an encoder with opposite sensors enlarges imaged code pattern on one side and reduces code imaged code pattern on the opposite sides, the pixel image gets stretched or compressed.

For determining the out-of plane shift, the gravity center distribution 13 is compared to gravity center distribution at initialization (calibrated reference value), as indicated in figure 5b. A distance change in z-direction (air gap variation) can be calculated for each head 4 and based on air gap change of each head 4, pitch and roll information can be extracted.

For determining said calibration reference value, a so called "self-calibration" is performed. During the self-calibration, the encoder 2 is turned around its own axis and raw-data of each image sensor is acquired over a 90° rotation at least, but this can also be a e.g. full 360° rotation. With the raw-data all calibration parameter are determined (for the final calibration process no reference is needed). During the self-calibration process, the harmonic deviations/errors of the additional degree of freedom are set to zero. Then, for every measurement after the calibration an "absolute" value for all six degree of freedom is calculated which is for the additional degree of freedoms in principal the change since the calibration, i.e. a difference to the respective calibration value. Thus, for a six-DoF determination, an absolute rotation angle, an "absolute" in-plane shift and an "absolute" out-of plane displacement are determined ("absolute" meaning a value compared to the calibration value).

According to the invention, for a respective rotation axis, the code image 11 is evaluated with regard to all six degrees of freedom. That is, for target direction measurement, the complete movement of the code carrier 3 vs. image sensor 4 is taken into account and therewith the full real positions and orientations of both first and second rotation axes v, h of the surveying instrument. In other words, the poses of the rotational components of the surveying device, in particular main part and sighting unit (cf. Fig. 1) which are decisive for the targeting direction are completely determined.

Moreover, in further developed embodiments, conclusions about a tilt of the instrument itself are drawn from the code image evaluation. That is, a deviation from an ideal or exact vertical orientation of the instrument's vertical axis v is determinable and/or compensable.

For example, because of gravity, a tilt of the instrument affects the balance of the rotationable components, e.g. the main part, which can produce a tilt within the angle encoder which is measurable as described above.

Generally spoken, the consideration of two or more, in particular all six, degrees of freedom in evaluation of angle encoder information allows to detect and compensate a change of relative position of the sighting unit and/or a deformation of the sighting unit or the alidade.

**Fig. 6** shows another example of a code with code elements 5 situated on a code carrier 3 and readably by image sensor 4, embodied as four sensor lines and offset by 90° whereby the pattern elements 5 are oriented radially toward the pattern center and arranged one behind another in the direction of rotation. The code carrier 3 is embodied e.g. by a light-transmissive glass disk with light-opaque triangles. However, the code carrier rotatable about the axis could also be embodied, for example, in the form of a thin metal disk having in this case triangular cutouts that embody the pattern elements 5 arranged one behind another in the direction of rotation.

The embodiment of the pattern elements 5, e.g. in form of triangles as shown, wherein mutually facing side lines of adjacent pattern elements 5 arranged one behind another, are embodied in a manner essentially inclined with respect to the radial direction, has, as a result of the additional inclination with respect to the radial direction, a greater sensitivity with regard to determining displacements or tilting of the code carrier 3 by means of the spatially resolving region. It even makes it possible to determine such changes in position of the code carrier by means of resolving the width of a single triangle, which is represented here for the two widths d1 and d2 of the region mapped onto the sensor 4. Thus, by way of example, from the width d1, d2 in the image, the position or the displacement thereof in here a radial direction can be identified and its extent can be determined. It goes without saying that it is also possible to determine such changes in position by means of the distances between the triangles. As a result here of the triangular form of the pattern elements directed in the direction of the pattern center, it is possible here by contrast - in comparison with rectangular pattern elements - to provide fewer pattern elements arranged one behind another, as a result of which a smaller resolution can be obtained.

However, the sensor arrangement of the rotary encoder can have, in principle and in a manner dependent on code configuration and accuracy requirements, either one or else four or more read heads or sensor lines 4, wherein, in principle, besides sensor lines 4 as linear arrays, it is also possible to use one or more area sensors, i.e. two-dimensional arrangements or matrix of pixels. For example a, in particular a single area scan sensor, can be arranged on the axis of rotation and detect the latter and an adjacent region, thus covering a large angular range in the region in proximity to the axis or else the full angular range.

In the case of four or more read heads, the latter can be arranged -besides dividing the arrangement with identical angular separations between the read heads or sensor components 4- in a manner offset with respect to one another at different angles in a circumferential direction, such that e.g. all angular separations differ from one another, in particular are in no ratio of multiples with respect to one another.

**Fig. 7** schematically shows a diagram as an example for a method for processing of the multidimensional goniometer information. The data of the first angle encoder (for example of the vertical axis) situated at the first measurement axis of the surveying instrument and of the second angle encoder (for example of the horizontal axis) situated at the second measurement axis of the surveying instrument which comprises beyond the rotational axis position information (first position) as such position information about at least a further degree of movement (second position), e.g. tilt of the code carrier relative to the encoder sensor, - particularly encoder measurement data which is descriptive of all six DoF. Thus, the data provided by the angle encoders is in particular indicative of instrument's horizontal axis error, collimation error and/or vertical index error.

The encoders' data in form of code image data 11v, 11h relating to all six DoF of the movement a code carrier relative to the sensor resp. relating to all six DoF of a respective associated rotation axis (instrument's vertical axis v and horizontal axis h) is input in a mathematical calculation and compensation model 12.

The main purpose of the compensation model 12 is to calculate the actual targeting direction t wherein targeting axis misalignments are considered and compensated. That is, the outputted targeting direction t is corrected for imperfections or errors such as axis wobble, misalignments such trunnion axis error or deformations caused by stressing the instrument, e.g. due to a tilt or imperfect levelling of the instrument. Such a levelling compensation enables precise surveying even with a tilted stationing of for example a total station, at least within certain limits of instrument's tilt, e.g. up to 10° or 20° tilt. Thereby, the model 12 can be configured in such a way that the degree of levelling compensation can depend on the degree of tilt. That is, the influence of the data about a second or further DoF on the outputted target axis value can be varied depending on the detected instrument's tilt, hence, can e.g. depend on the second encoder position's value itself, e.g. by weighting it in dependence of a degree of tilt.

As indicated in the figure, above that, the inputted code images 11v, 11h can be evaluated e.g. using a mathematical model 12 to monitor the levelling and use it to put out a warning message if the degree of tilt is too high. For example, once the processing unit running the model 12 receives the sensed value of the respective parameter, it compares the detected value with a predetermined threshold. Alternatively, the angle encoder may be configured to itself compare the detected value with the predetermined threshold and to transmit the difference between the detected value and the predetermined threshold to the processing unit. On the basis of the comparison between the detected value of the second position and the predetermined threshold, it is determined whether a levelling warning is necessary or not. If a signaling is needed, the instrument generates an alert informing the need for re-levelling of the instrument. The alert may be generated when the detected value exceeds a predetermined threshold if the predetermined threshold corresponds to a maximal allowable value.

As a further option indicated in the figure, the multidimensional encoder information is used for health monitoring of the surveying instrument. For example, it can be watched if an actual axis' value is within a defined tolerance. Alternatively or additionally, such values or other results of evaluation of the 6-DoF code images 11v, 11h are permanently stored in a data storage of the surveying instrument or else in a data storage connected to the instrument and evaluated over time. Therewith, trends or drifts of the axis' value or of a state of the respective instrument's axis can be monitored which can indicate wearout or damages. Thus, also intervals for calibration and/or service can be defined based on the 6-DoF encoder information instead of predefined or fixed intervals.

**Claims**

1. A geodetic surveying instrument (1) comprising

   • a sighting unit (23) for aiming in a target direction (t) at a measurement target point,
   • an opto-electronic distance meter built to determine a target distance to the measurement target point aimed at,
   • at least one defined axis of rotation (v, h) for setting the target direction (t) by rotation about the axis (v, h),
   • an axis' angle encoder (2) for determining the target direction (3), having a code carrier (3) and at least one 2D-image sensor and/or an arrangement of at least four distributed 1D-image sensors for capturing at least one image of code -denoted code image (11)- of the code carrier (3) each using non-collimated light (8), whereby the code carrier (3) and the image sensor (4) are rotatable relative to one another about the defined axis of rotation (v, h) as a first degree of freedom, and
   • a controller (25) configured to derive measured coordinates of the measurement target point based on the determined target direction (t) and target distance of the measurement target point, wherein the controller (25) is configured to determine the actual target direction (t) based on an evaluation of a code image (11) generated by the 2D-image sensor (4) and/or code images (11) of the 1D-image sensors (4) in the rotational position of the actual target direction (t), the evaluation being made
   • with respect to a rotational position relative to the axis of rotation (v, h) in said first degree of freedom of the code carrier (3) relative to the image sensor and/or the image sensor arrangement (4) and
   • with respect to a further position in at least a further degree of freedom of the code carrier (3) relative to the image sensor and/or the image sensor arrangement (4),

   **characterized in that**
   the controller (25) is configured to evaluate the code image and/or the code images (11) with respect to all six degrees of freedom of the code carrier (3) relative to the image sensor or the image sensor arrangement (4).

2. A geodetic surveying instrument (1) according to claim 1, **characterized in that,**
   the further degree of freedom relates to

   • a movement of the code carrier (3) relative to the image sensor and/or the image sensor arrangement (4) in the direction of the axis of rotation (v, h) and/or in a radial direction regarding the axis of rotation (v, h) and/or
   • a tilt of the code carrier (3) relative to the plane spanned by the image sensor and/or the image sensor arrangement (4).

3. A geodetic surveying instrument (1) according to any one of the preceding claims,
   **characterized in that**
   the controller (25) is configured to determine the target direction (t) based on a target direction calculation model (12) to calculate the actual target direction (t) corrected for target axis misalignments with values for the rotational position and the further position derived from the code image evaluation as input.

4. A geodetic surveying instrument (1) according to any one of the preceding claims,
   **characterized in that**
   the controller (25) is configured to determine and/or compensate a deviation from an exact orientation of the axis of rotation (v, h).

5. A geodetic surveying instrument (1) according to claim 3 and 4,
   **characterized in that**
   the calculation model (12) is designed to directly compensate the target axis misalignments.

6. A geodetic surveying instrument (1) according to any one of the preceding claims,
   **characterized in that**
   the controller (25) is configured to determine based on the further position a change of a relative position, in particular corresponding to the further degree of freedom of the code carrier (3), of the sighting unit (23) with respect to a support (21, 22).

7. A geodetic surveying instrument (1) according to any one of the preceding claims,
   **characterized in that**
   the controller (25) is configured to determine the target direction (t) based on said image evaluation with respect to the further position in dependence on a tilting of the surveying instrument (1), in particular by weighting the further position in dependence on a degree of tilting of the surveying instrument (1).

8. A geodetic surveying instrument (1) according to any one of the preceding claims,
   **characterized in that**
   the controller (25) is configured to put out a notice, in particular a user warning, if a defined threshold for the further position is exceeded.

9. A geodetic surveying instrument (1) according to any one of the preceding claims,

**characterized in that**
the controller (25) is configured to collect and evaluate a history of position values in order to determine a wearing condition of the geodetic surveying instrument (1), in particular of an axis bearing.

10. A geodetic surveying instrument (1) according to any one of the preceding claims,
**characterized in that**
the geodetic surveying instrument (1) is embodied as a total station, laser scanner, laser tracker or laser profiler.

11. A method for a determining measured coordinates of a measurement target point with a geodetic surveying instrument (1) having

   • at least one defined axis of rotation (v, h) for setting a target direction (t) by rotation about the axis of rotation (v, h),
   • an axis' optical angle encoder (2), having a code carrier (3) and at least one 2D-image sensor and/or an arrangement of at least four distributed 1D-image sensors for capturing an image of code -denoted code image (11)- of the code carrier (3) using non-collimated light (8), whereby the code carrier (3) and the image sensor (4) are designed to rotate relative to one another about the defined axis of rotation (v, h) as a first degree of freedom and the method comprising
   • aiming in the target direction (t) at the measurement target point, whereby the target direction (t) is set by rotation about the axis (h, v),
   • determining the target direction (t),
   • opto-electronically determining a target distance to the measurement target point aimed at,
   • deriving measured coordinates of the measurement target point based on the determined target direction (t) and target distance of the measurement target point, wherein the target direction (t) is determined based on an evaluation of a code image (11) generated by the 2D-image sensor (4) and/or code images (11) of the 1D-image sensors (4) in the rotational position of the actual target direction (t)
   • with respect to a rotational position relative to the axis of rotation (v, h) in said first degree of freedom of the code carrier (3) relative to the image sensor and/or the image sensor arrangement (4) and
   • with respect to a further position in at least a further degree of freedom of the code carrier (3) relative to the image sensor and/or the image sensor arrangement (4)),

**characterized in that**
the target direction (t) is determined by evaluating the code image and/or the code images with respect tc all six degrees of freedom of the code carrier (3) relative to the image sensor or the image sensor arrangement (4).

12. A method according to claim 11,
**characterized in that**
the evaluation with respect to the further degree of freedom comprises determining a difference to calibration reference values defined by a self-calibration step with at least 90deg-rotating the image sensor or the image sensor arrangement (4) relative to the code carrier (3) about the axis of rotation (v, h) and setting harmonic errors derived therefrom to zero.

13. A computer program product having computer-executable instructions for performing the automatic execution of the steps of the method according to claim 11.

**Patentansprüche**

1. Geodätisches Vermessungsinstrument (1), umfassend

   • eine Visiereinheit (23) zum Anvisieren eines Messzielpunkts in einer Zielrichtung (t),
   • einen optoelektronischen Entfernungsmesser, der aufgebaut ist, eine Zielentfernung zu dem anvisierten Messzielpunkt zu bestimmen,
   • mindestens eine definierte Drehachse (v, h) zum Einstellen der Zielrichtung (t) durch Drehung um die Achse (v, h),
   • einen Achsenwinkelcodierer (2) zum Bestimmen der Zielrichtung (3), der einen Codeträger (3) und mindestens einen 2D-Bildsensor aufweist und/oder eine Anordnung von mindestens vier verteilten 1D-Bildsensoren zum Erfassen von mindestens einem als Codebild (11) bezeichneten Bild von Code des Codeträgers (3) jeweils unter Verwendung von nicht-kollimiertem Licht (8), wobei der Codeträger (3) und der Bildsensor (4) relativ zueinander um die definierte Drehachse (v, h) als ein erster Freiheitsgrad drehbar sind, und
   • eine Steuerung (25), die eingerichtet ist, gemessene Koordinaten des Messzielpunkts basierend auf der bestimmten Zielrichtung (t) und der Zielentfernung des Messzielpunkts abzuleiten,
   wobei die Steuerung (25) eingerichtet ist, die tatsächliche Zielrichtung (t) basierend auf einer Auswertung eines von dem 2D-Bildsensor (4) erzeugten Codebildes (11) und/oder von Codebildern (11) der 1D-Bildsensoren (4) in der Drehposition der tatsächlichen Zielrichtung (t) zu bestimmen, wobei die Auswertung vorgenommen wird

• bezüglich einer Drehposition relativ zu der Drehachse (v, h) in dem ersten Freiheitsgrad des Codeträgers (3) relativ zu dem Bildsensor und/oder der Bildsensoranordnung (4) und
• bezüglich einer weiteren Position in mindestens einem weiteren Freiheitsgrad des Codeträgers (3) relativ zu dem Bildsensor und/oder der Bildsensoranordnung (4),

**dadurch gekennzeichnet, dass**
die Steuerung (25) eingerichtet ist, das Codebild und/oder die Codebilder (11) bezüglich allen sechs Freiheitsgraden des Codeträgers (3) relativ zu dem Bildsensor oder der Bildsensoranordnung (4) auszuwerten.

2. Geodätisches Vermessungsinstrument (1) nach Anspruch 1, **dadurch gekennzeichnet, dass,**
sich der weitere Freiheitsgrad bezieht auf

• eine Bewegung des Codeträgers (3) relativ zu dem Bildsensor und/oder der Bildsensoranordnung (4) in Richtung der Drehachse (v, h) und/oder in einer radialen Richtung bezüglich der Drehachse (v, h) und/oder
• eine Neigung des Codeträgers (3) relativ zu der Ebene, die durch den Bildsensor und/oder die Bildsensoranordnung (4) überspannt wird.

3. Geodätisches Vermessungsinstrument (1) nach einem der vorstehenden Ansprüche,
**dadurch gekennzeichnet, dass**
die Steuerung (25) eingerichtet ist, die Zielrichtung (t) basierend auf einem Zielrichtungsberechnungsmodell (12) zu bestimmen, um die bezüglich Zielachsenfehlausrichtungen korrigierte tatsächliche Zielrichtung (t) mit Werten für die Drehposition und der von der Codebildauswertung abgeleiteten weiteren Position als Eingabe zu berechnen.

4. Geodätisches Vermessungsinstrument (1) nach einem der vorstehenden Ansprüche,
**dadurch gekennzeichnet, dass**
die Steuerung (25) eingerichtet ist, eine Abweichung von einer exakten Ausrichtung der Drehachse (v, h) zu bestimmen und/oder zu kompensieren.

5. Geodätisches Vermessungsinstrument (1) nach Anspruch 3 und 4,
**dadurch gekennzeichnet, dass**
das Berechnungsmodell (12) ausgelegt ist, die Zielachsenfehlausrichtungen direkt zu kompensieren.

6. Geodätisches Vermessungsinstrument (1) nach einem der vorstehenden Ansprüche,
**dadurch gekennzeichnet, dass**
die Steuerung (25) eingerichtet ist, basierend auf der weiteren Position eine Änderung einer relativen Position, insbesondere entsprechend dem weiteren Freiheitsgrad des Codeträgers (3), der Visiereinheit (23) in Bezug auf eine Stütze (21, 22) zu bestimmen.

7. Geodätisches Vermessungsinstrument (1) nach einem der vorstehenden Ansprüche,
**dadurch gekennzeichnet, dass**
die Steuerung (25) eingerichtet ist, die Zielrichtung (t) basierend auf der Bildauswertung in Bezug auf die weitere Position in Abhängigkeit von einer Neigung des Vermessungsinstruments (1) insbesondere durch Gewichten der weiteren Position in Abhängigkeit von einem Neigungsgrad des Vermessungsinstruments (1) zu bestimmen.

8. Geodätisches Vermessungsinstrument (1) nach einem der vorstehenden Ansprüche,
**dadurch gekennzeichnet, dass**
die Steuerung (25) eingerichtet ist, eine Meldung und insbesondere eine Benutzerwarnung auszugeben, wenn ein definierter Schwellenwert für die weitere Position überschritten wird.

9. Geodätisches Vermessungsinstrument (1) nach einem der vorstehenden Ansprüche,
**dadurch gekennzeichnet, dass**
die Steuerung (25) eingerichtet ist, einen Verlauf von Positionswerten zu sammeln und auszuwerten, um einen Verschleißzustand des geodätischen Vermessungsinstruments (1) und insbesondere eines Achslagers zu bestimmen.

10. Geodätisches Vermessungsinstrument (1) nach einem der vorstehenden Ansprüche,
**dadurch gekennzeichnet, dass**
das geodätische Vermessungsinstrument (1) als Totalstation, Laserscanner, Lasertracker oder Laserprofiler ausgeführt ist.

11. Verfahren zum Bestimmen von gemessenen Koordinaten eines Messzielpunkts mit einem geodätischen Vermessungsinstrument (1), aufweisend

• mindestens eine definierte Drehachse (v, h) zum Einstellen einer Zielrichtung (t) durch Drehung um die Drehachse (v, h),
• einen optischen Achsenwinkelcodierer (2), der einen Codeträger (3) und mindestens einen 2D-Bildsensor aufweist und/oder eine Anordnung von mindestens vier verteilten 1D-Bildsensoren zum Erfassen von einem als Codebild (11) bezeichneten Bild von Code des Codeträgers (3) unter Verwendung von nicht-kollimiertem Licht (8), wobei der Codeträger (3) und der Bildsensor (4) ausgelegt sind, sich relativ zueinander um die definierte Drehachse (v, h) als ein erster Freiheitsgrad zu drehen,

wobei das Verfahren umfasst

• Anvisieren des Messzielpunkts in der Zielrichtung (t), wobei die Zielrichtung (t) durch Drehung um die Achse (h, v) eingestellt wird,
• Bestimmen der Zielrichtung (t),
• optoelektronisch Bestimmen einer Zielentfernung zu dem anvisierten Messzielpunkt,
• Ableiten von gemessenen Koordinaten des Messzielpunkts basierend auf der bestimmten Zielrichtung (t) und der Zielentfernung des Messzielpunkts,

wobei die Zielrichtung (t) basierend auf der Auswertung eines von dem 2D-Bildsensor (4) erzeugten Codebildes (11) und/oder von Codebildern (11) der 1D-Bildsensoren (4) in der Drehposition der tatsächlichen Zielrichtung (t) bestimmt wird

• bezüglich einer Drehposition relativ zu der Drehachse (v, h) in dem ersten Freiheitsgrad des Codeträgers (3) relativ zu dem Bildsensor und/oder zu der Bildsensoranordnung (4) und
• bezüglich einer weiteren Position in mindestens einem weiteren Freiheitsgrad des Codeträgers (3) relativ zu dem Bildsensor und/oder der Bildsensoranordnung (4),

**dadurch gekennzeichnet, dass**
die Zielrichtung (t) durch Auswerten des Codebildes und/oder der Codebilder bezüglich allen sechs Freiheitsgraden des Codeträgers (3) relativ zu dem Bildsensor oder der Bildsensoranordnung (4) bestimmt wird.

12. Verfahren nach Anspruch 11,
**dadurch gekennzeichnet, dass**
die Auswertung bezüglich des weiteren Freiheitsgrades das Bestimmen einer Differenz zu Kalibrierungsreferenzwerten umfasst, die durch einen Selbstkalibrierungsschritt definiert werden, wobei der Bildsensor oder die Bildsensoranordnung (4) relativ zu dem Codeträger (3) um mindestens 90° um die Drehachse (v, h) gedreht wird und daraus abgeleitete harmonische Fehler auf Null gesetzt werden.

13. Computerprogrammprodukt mit computerausführbaren Befehlen zum Durchführen der automatischen Ausführung der Schritte des Verfahrens nach Anspruch 11.

**Revendications**

1. Instrument d'arpentage géodésique (1) comprenant

• une unité de visée (23) pour viser dans une direction cible (t) un point cible de mesure,
• un télémètre optoélectronique construit pour déterminer une distance cible au point cible de mesure visé,
• au moins un axe de rotation défini (v, h) pour régler la direction cible (t) par rotation autour de l'axe (v, h),
• un dispositif de codage angulaire d'axe (2) pour déterminer la direction cible (3), comportant un support de code (3) et au moins un capteur d'image 2D et/ou un agencement d'au moins quatre capteurs d'image 1D répartis pour capturer au moins une image de code - désignée image de code (11) - du support de code (3), chacun utilisant une lumière non collimatée (8), moyennant quoi le support de code (3) et le capteur d'image (4) sont rotatifs l'un par rapport à l'autre autour de l'axe de rotation défini (v, h) comme premier degré de liberté, et
• un contrôleur (25) configuré pour dériver des coordonnées mesurées du point cible de mesure sur la base de la direction cible (t) déterminée et de la distance cible du point cible de mesure déterminée,
• dans lequel le contrôleur (25) est configuré pour déterminer la direction cible réelle (t) sur la base d'une évaluation d'une image de code (11) générée par le capteur d'image 2D (4) et/ou d'images de code (11) des capteurs d'image 1D (4) dans la position de rotation de la direction cible réelle (t), l'évaluation étant effectuée
• en ce qui concerne une position de rotation relativement à l'axe de rotation (v, h) dans ledit premier degré de liberté du support de code (3) relativement au capteur d'image et/ou à l'agencement de capteurs d'image (4) et
• en ce qui concerne une position supplémentaire dans au moins un degré de liberté supplémentaire du support de code (3) relativement au capteur d'image et/ou à l'agencement de capteurs d'image (4),

**caractérisé en ce que**
le contrôleur (25) est configuré pour évaluer l'image de code et/ou les images de code (11) en ce qui concerne tous les six degrés de liberté du support de code (3) relativement au capteur d'image ou à l'agencement de capteurs d'image (4).

2. Instrument d'arpentage géodésique (1) selon la revendication 1, **caractérisé en ce que**
le degré de liberté supplémentaire se rapporte à

• un mouvement du support de code (3) relativement au capteur d'image et/ou à l'agencement de capteurs d'image (4) dans la direction de l'axe de rotation (v, h) et/ou dans une direction radiale concernant l'axe de rotation (v, h) et/ou

• une inclinaison du support de code (3) relativement au plan couvert par le capteur d'image et/ou l'agencement de capteurs d'image (4).

3. Instrument d'arpentage géodésique (1) selon l'une quelconque des revendications précédentes, **caractérisé en ce que** le contrôleur (25) est configuré pour déterminer la direction cible (t) sur la base d'un modèle de calcul (12) de direction cible afin de calculer la direction cible réelle (t) corrigée en termes de désalignements d'axe cible, avec des valeurs pour la position de rotation et la position supplémentaire dérivées de l'évaluation d'image de code comme entrée.

4. Instrument d'arpentage géodésique (1) selon l'une quelconque des revendications précédentes, **caractérisé en ce que** le contrôleur (25) est configuré pour déterminer et/ou compenser un écart par rapport à une orientation exacte de l'axe de rotation (v, h).

5. Instrument d'arpentage géodésique (1) selon les revendications 3 et 4, **caractérisé en ce que** le modèle de calcul (12) est conçu pour compenser directement les désalignements d'axe cible.

6. Instrument d'arpentage géodésique (1) selon l'une quelconque des revendications précédentes, **caractérisé en ce que** le contrôleur (25) est configuré pour déterminer, sur la base de la position supplémentaire, un changement d'une position relative, en particulier correspondant au degré de liberté supplémentaire du support de code (3), de l'unité de visée (23) en ce qui concerne un organe de soutien (21, 22).

7. Instrument d'arpentage géodésique (1) selon l'une quelconque des revendications précédentes, **caractérisé en ce que** le contrôleur (25) est configuré pour déterminer la direction cible (t) sur la base de ladite évaluation d'image en ce qui concerne la position supplémentaire en fonction d'une inclinaison de l'instrument d'arpentage (1), en particulier en pondérant la position supplémentaire en fonction d'un degré d'inclinaison de l'instrument d'arpentage (1).

8. Instrument d'arpentage géodésique (1) selon l'une quelconque des revendications précédentes, **caractérisé en ce que**

le contrôleur (25) est configuré pour émettre une notification, en particulier un avertissement utilisateur, si un seuil défini pour la position supplémentaire est dépassé.

9. Instrument d'arpentage géodésique (1) selon l'une quelconque des revendications précédentes, **caractérisé en ce que** le contrôleur (25) est configuré pour collecter et évaluer un historique des valeurs de position afin de déterminer un état d'usure de l'instrument d'arpentage géodésique (1), en particulier d'un palier d'axe.

10. Instrument d'arpentage géodésique (1) selon l'une quelconque des revendications précédentes, **caractérisé en ce que** l'instrument d'arpentage géodésique (1) est réalisé sous la forme d'une station totale, d'un scanneur laser, d'un dispositif de poursuite laser ou d'un profileur laser.

11. Procédé pour déterminer des coordonnées mesurées d'un point cible de mesure à l'aide d'un instrument d'arpentage géodésique (1) comportant

• au moins un axe de rotation défini (v, h) pour régler une direction cible (t) par rotation autour de l'axe de rotation (v, h),
• un dispositif de codage angulaire optique d'axe (2), comportant un support de code (3) et au moins un capteur d'image 2D et/ou un agencement d'au moins quatre capteurs d'image 1D répartis pour capturer une image de code - désignée image de code (11) - du support de code (3) à l'aide d'une lumière non collimatée (8), moyennant quoi le support de code (3) et le capteur d'image (4) sont conçus pour être rotatifs l'un par rapport à l'autre autour de l'axe de rotation défini (v, h) comme premier degré de liberté, et

le procédé comprenant
• la visée dans la direction cible (t) vers le point cible de mesure, moyennant quoi la direction cible (t) est définie par rotation autour de l'axe (h, v),
• la détermination de la direction cible (t),
• la détermination de manière optoélectronique d'une distance cible au point cible de mesure visé,
• la dérivation de coordonnées mesurées du point cible de mesure sur la base de la direction cible (t) déterminée et de la distance cible du point cible de mesure déterminée,

dans lequel la direction cible (t) est déterminée sur la base d'une évaluation d'une image de code (11) générée par le capteur d'image 2D (4) et/ou d'images de code (11) des capteurs d'image 1D (4) dans la position de rotation de la direction cible réelle (t)

• en ce qui concerne une position de rotation relativement à l'axe de rotation (v, h) dans ledit premier degré de liberté du support de code (3) relativement au capteur d'image et/ou à l'agencement de capteurs d'image (4) et

• en ce qui concerne une position supplémentaire dans au moins un degré de liberté supplémentaire du support de code (3) relativement au capteur d'image et/ou à l'agencement de capteurs d'image (4)),

**caractérisé en ce que**
la direction cible (t) est déterminée en évaluant l'image de code et/ou les images de code en ce qui concerne tous les six degrés de liberté du support de code (3) relativement au capteur d'image ou à l'agencement de capteurs d'image (4).

12. Procédé selon la revendication 11,
**caractérisé en ce que**
l'évaluation en ce qui concerne le degré de liberté supplémentaire comprend la détermination d'une différence par rapport à des valeurs de référence d'étalonnage définies par une étape d'autoétalonnage avec une rotation d'au moins 90 degrés du capteur d'image ou de l'agencement de capteurs d'image (4) relativement au support de code (3) autour de l'axe de rotation (v, h) et la mise à zéro des erreurs harmoniques qui en sont dérivées.

13. Produit-programme d'ordinateur
comportant des instructions exécutables par ordinateur pour effectuer l'exécution automatique des étapes du procédé selon la revendication 11.

Fig. 1

Fig. 2

Fig. 3a

Fig. 3b          Fig. 3c

Fig. 3d          Fig. 3e

Fig. 4a

Fig. 4b

Fig. 4c

Fig. 5a

Fig. 5b

Fig. 6

| | | |
|---|---|---|
| 1st 6-DoF-code image,11v | | Target axis t compens. |
| | 12 | Levelling compens. |
| 2nd 6-DoF-code image,11h | | Levelling warning |
| | | Health monitoring |

Fig. 7

**REFERENCES CITED IN THE DESCRIPTION**

**Patent documents cited in the description**

- US 2007104353 A
- US 2009024342 A
- US 2015176991 A
- EP 1836457 A
- EP 2728309 A2
- EP 3540374 A1
- EP 3696498 A1
- EP 2707745 A1
- EP 2607845 A2
- WO 2011064317 A2
- EP 3026393 A1